(19) Europäisches Patentamt / European Patent Office / Office européen des brevets

(11) **EP 1 775 967 A2**

(12) **EUROPEAN PATENT APPLICATION**

(43) Date of publication:
**18.04.2007 Bulletin 2007/16**

(51) Int Cl.:
***H04N 17/00*** *(2006.01)*

(21) Application number: **06255144.5**

(22) Date of filing: **05.10.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **07.10.2005 US 245563**<br><br>(71) Applicant: **Ricoh Company, Ltd.**<br>**Tokyo 143-8555 (JP)** | (72) Inventors:<br>• **Robinson, Dirk**<br>**c/o Ricoh Innovations, Inc**<br>**Menlo Park, CA 94025-7022 (US)**<br>• **Stork, David G.**<br>**c/o Ricoh Innovations, Inc**<br>**Menlo Park, CA 94025-7022 (US)**<br><br>(74) Representative: **Leeming, John Gerard**<br>**J.A. Kemp & Co.,**<br>**14 South Square,**<br>**Gray's Inn**<br>**London WC1R 5JJ (GB)** |

(54) **Joint optics and image processing adjustment of electro-optic imaging systems**

(57) Adjustments to the optical subsystem of an electro-optic imaging system take into account different subsystems within the overall electro-optic imaging system. In one implementation, end-to-end imaging performance is predicted based on determining propagation of a source through the optical subsystem, the detector subsystem and the digital image processing subsystem. The optical subsystem is then adjusted after taking into account these other subsystems. For example, the compensators for the optical subsystem and the digital image processing subsystem may be jointly adjusted based on a post-processing performance metric that takes into account the effects of the image processing. Unlike in conventional approaches, the intermediate optical image produced by the optical subsystem is not required to be high image quality since, for example, the image may be subsequently improved by other adjustments in the digital image processing subsystem.

FIG. 2

**Description**

BACKGROUND OF THE INVENTION

1. Field of the Invention

The present invention relates generally to the adjustment or compensation of electro-optic imaging systems, typically during or after their manufacture and assembly.

2. Description of the Related Art

Electro-optic imaging systems typically include an optical subsystem (e.g., a lens assembly), an electronic detector subsystem (e.g., CCD detector array) and a digital image processing subsystem (e.g., typically implemented in dedicated chips or software). In the manufacturing process, the variations in fabrication and assembly of electro-optic imaging systems can degrade the overall system performance.

For example, in the optical subsystem, important performance characteristics of a fabricated lens element depend on the quality and accuracy of the optical surfaces. The quality of the lens surface describes the finish of the lens (scratches, stains, etc). The accuracy of the lens surface describes how close the fabricated lens element meets the nominal design specifications. Common errors in the lens fabrication stage include surface power variations (radii of curvature), asymmetrical error (e.g., element wedge and decentration) and thickness errors. Common errors in the assembly stage include element tilt, decenter, and spacing or position errors.

The manufacture of the detector subsystem also carries inherent process variations. The semiconductor manufacturing process can produce a wide variety of variations in the detector quality. The effects of such manufacturing variations are characterized by the random noise properties associated with a given detector as well as deterministic errors such as faulty pixels or columns. The noise effects include temporal noise (shot noise, reset noise, amplifier noise, and dark current noise) and spatial noise (photo response non-uniformity). Other photodetector artifacts include blooming or the spreading of charge to neighboring pixels.

After manufacturing is completed, normal routine use can also result in gradual degradation of the system performance, for example if optical elements slowly drift out of alignment. Due to the high sensitivity of optical systems to these perturbations, the imaging performance of the final fielded system can be substantially lower than that of the theoretical nominal design. The ability to correct or compensate for such variations is therefore an important part of the manufacture and use of electro-optic imaging systems.

For instance, tolerance analysis or sensitivity analysis can be used to reveal aspects of a design that are most sensitive to manufacturing or assembly errors. Using tolerance analysis, the designer attempts to find designs with reduced sensitivity to such errors. However, while sensitivity analysis can reduce the sensitivity of a design to specific errors, in many cases, sensitivity analysis alone often is not sufficient to insure the desired performance of an electro-optic imaging system.

Another technique to combat process variations involves "compensators." As suggested by their name, compensators are used to adjust certain parameters of the electro-optic imaging system (which will be referred to as compensation parameters) in order to compensate for the unwanted variations. One class of compensators is mechanical compensators, for example fine screw threads. These can be used to adjust the position of optical elements in the optical subsystem to compensate for variations in the overall system. Compensators may be adjusted as part of the initial assembly process before the system is placed in the field for use and/or as part of a calibration process or re-calibration process after the system is placed in the field for use.

However, because electro-optic imaging systems are generally complex, adjustment of compensators is often performed at the subsystem level. Traditional methods for adjusting compensators generally involve two discrete stages. First, compensators for the optical subsystem are adjusted without regard to possible compensation in the digital image processing subsystem. The traditional goal is to adjust the optical subsystem compensators to form a high quality intermediate optical image of a source. Second, the image processing subsystem is subsequently adjusted to attempt to digitally compensate for any remaining defects in the intermediate optical image.

The two stages of compensation typically occur with very little coordination between them. The separation of these stages is a reflection of the significant differences between the fields of optics and image processing in their methods, tools, goals and constraints. For example, each field covers a large swath of potential applications but there typically is little overlap between the two fields other than the design of electro-optic imaging systems. The manufacturers of conventional microscopes, telescopes, eyeglasses, etc. typically do not consider any significant image processing. Likewise, areas of image processing such as compression, computer graphics, and image enhancement typically do not involve any significant optics knowledge. As a result, each field has evolved independent of the other and developed its own unique terminology, best practices, and set of tools. In general, the familiarity required to master each of these domains hinders a unified perspective to electro-optic imaging systems. One important challenge to a unified perspective is the lack of a common language with which to describe the problems and approaches between the two distinct fields. One prominent example can be seen in the thinking about the fundamental conceptual elements associated with each field. Optical systems deal with rays of light and passive optical elements whereas image processing systems deal with bytes of information and active algorithms. The laws and constraints governing these two fundamental classes of entities differ in numerous ways.

One drawback to the traditional approach is that synergies between the optical subsystem and the digital image processing subsystem may be overlooked. The adjustment of the optical subsystem creates the "best" optical image without knowledge of the digital image processing subsystem. The adjustment of the image processing subsystem creates the "best" digital image without the ability to modify the previously adjusted optical subsystem. These subsystems then form the electro-optic imaging system. The concatenation of two independently adjusted "best" subsystems may not yield the "best" overall image. There may be unwanted interactions between the two independently adjusted subsystems and potential synergies between the two subsystems may go unrealized.

Thus, there is a need for approaches to adjusting electro-optic imaging systems based on consideration of the entire electro-optic imaging system as a whole that optimizes performance.

## SUMMARY OF THE INVENTION

The present invention overcomes the limitations of the prior art by providing a unified adjustment strategy that takes into account different subsystems within the overall electro-optic imaging system. In one implementation, the methodology predicts end-to-end imaging performance based on determining propagation of a source through the optical subsystem, the detector subsystem and the digital image processing subsystem. The optical subsystem is then adjusted after taking into account these other subsystems. For example, adjustment may be based directly on a post-processing performance metric that takes into account the effects of the image processing. The compensators for the optical subsystem and the digital image processing subsystem may be jointly adjusted based on the post-processing performance metric. Unlike in conventional approaches, the intermediate optical image produced by the optical subsystem is not required to be high image quality since, for example, the image may be subsequently improved by other adjustments in the digital image processing subsystem.

The adjustment methodology views the combined electro-optic imaging system as a whole and attempts to optimize a set of compensation parameters for a desired output. In this way, this framework offers a unified perspective and language with which to evaluate the end-to-end performance of an electro-optic imaging system. In effect, such a method relaxes the traditional requirement that the intermediate optical image formed by the optical subsystem be high image quality, as measured by traditional optical figures of merit such as wavefront error or spot size.

In one implementation, the adjustment approach includes modeling propagation through the electro-optic imaging system based on a spatial model of the source. The optical subsystem and the digital image processing subsystem are then jointly adjusted based directly on a post-processing performance metric, where the metric is calculated based on the modeled propagation. The optical subsystem may be adjusted based on optimizing the post-processing performance metric, for example, assuming that the image processing parameters are chosen to give a globally optimal performance. This is done without requiring that the optical subsystem form a high quality intermediate optical image of the source.

Modeling the propagation of light through the optical subsystem can be achieved in a number of ways. The specific implementations will depend on the particular application. If a linear systems approach is used, the optical subsystem and detector subsystem can be modeled using $\mathbf{y}=\mathbf{Hs}+\mathbf{n}$, where $\mathbf{y}$ is the predicted image, $\mathbf{s}$ is an ideal sampled image of the source, $\mathbf{H}$ is a sampled point spread function accounting for both the optical subsystem and the detector subsystem, and $\mathbf{n}$ is noise.

The post-processing performance metric will also vary by application. A preferred digital image performance metric is the mean square error between an ideal image of the source and the image produced by propagation of the source through the electro-optic imaging system. For applications where the end goal is some sort of detection or recognition (e.g., character recognition or bar code reading), the post-processing performance metric may be a measure of the accuracy of recognition, for example the error rate, rate of false positives, bit error rate, etc.

One advantage of the end-to-end adjustment approach is that the resulting electro-optic imaging system may achieve the same or better performance than that of a traditionally adjusted system, even though the optical subsystem may form an intermediate optical image that is significantly worse in image quality than that formed by the traditionally designed optical subsystem.

Many different implementations of the end-to-end adjustment approach will also be apparent. With respect to determining propagation through the optical subsystem, in one approach, the optical subsystem is characterized by optical measurement equipment and the characterization is used to produce a model of the optical subsystem. For example, conventional equipment can be used to measure the point spread function, modulation transfer function or optical transfer function of the optical subsystem, with these quantities then forming the basis of the model of the optical subsystem. Adjustments are applied to the actual optical subsystem and the measurement equipment then makes a new characterization of the adjusted subsystem.

In an alternate approach, physical measurements of the optical subsystem can be taken (e.g., lens shapes, spacings, tilts, etc.) and used to build a more detailed model of the optical subsystem. Adjustments can be applied to this "virtual" optical subsystem and optimization can proceed on this basis. Once the final adjustments are determined via this simulation, they are then applied to the actual optical subsystem.

At the other end of the spectrum, propagation of a source through the optical subsystem can be determined based on actual propagation rather than based on a model. In other words, an actual source can be used to illuminate the actual optical subsystem. Similar remarks apply to the detector subsystem and digital image processing subsystem.

In one implementation, conventional optical measurement equipment is modified to incorporate models of the detector subsystem and digital image processing subsystem. For example, a conventional interferometric tester may display an OPD map of the optical subsystem. However, the modified tester includes the detector model and digital image processing model. Test images may also be loaded to the modified tester. After obtaining the OPD map, the tester simulates propagation through the entire electro-optic imaging system and displays a simulated image or other post-processing performance metric, rather than the OPD map.

In another version of the invention, the adjustment process itself can occur at different stages. For example, adjustment can occur as part of manufacture or assembly of the electro-optic imaging system. Alternately, it might occur as part of a field adjustment of the electro-optic imaging system.

Other versions of the invention include software, devices and tools to implement the adjustment methods described above.

Other objects, features and advantages of the present invention will become more apparent from the following detailed description when read in conjunction with the accompanying drawings.

## BRIEF DESCRIPTION OF THE DRAWINGS

FIG. 1 is a block diagram illustrating the problem of adjusting an electro-optic imaging system.

FIG. 2 is a flow diagram illustrating a method for adjusting an electro-optic imaging system according to the present invention.

FIG. 3 is a diagram illustrating an example adjustment method.

FIG. 4 is a diagram illustrating adjustment of a singlet lens system.

FIGS. 5A-5B are graphs of OPD and RMSE vs. focal distance for the singlet lens system of FIG. 4.

FIG. 6 is a diagram illustrating adjustment of a doublet lens system.

FIGS. 7A-7B are graphs of OPD and RMSE vs. vs. focal distance for the doublet lens system of FIG. 6 with lens tilt.

FIGS. 8A-8B are graphs of OPD and RMSE vs. focal distance for the doublet lens system of FIG. 6 with decentration.

FIG. 9 is a table comparing traditional adjustment with end-to-end adjustment for the doublet lens system of FIG. 6 with lens tilt.

FIGS. 10-12 are block diagrams of example implementations of the adjustment method according to the invention.

## DETAILED DESCRIPTION OF THE PREFERRED EMBODIMENTS

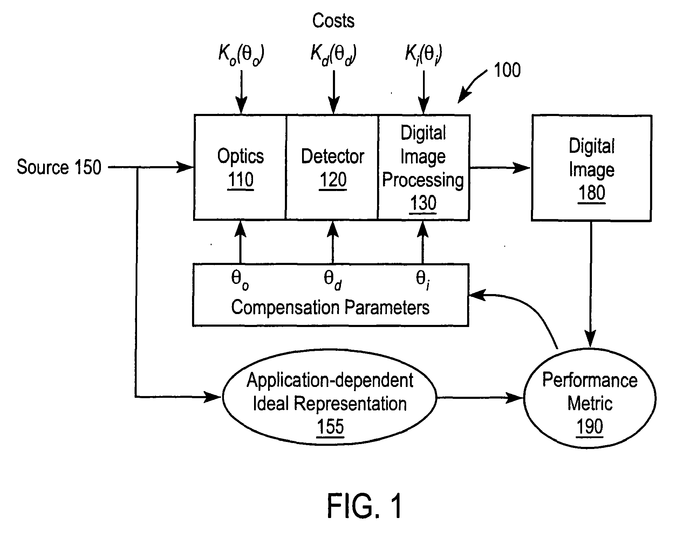

FIG. 1 is a block diagram illustrating the problem of post-design adjustment of an electro-optic imaging system 100. The imaging system 100 includes an optical subsystem 110, detector subsystem 120 and digital image processing subsystem 130. The imaging system 100 is intended to image a source 150 and produces digital image 180. The imaging system 100 has already been designed and is now in the process of manufacture or post-manufacture adjustment. The general problem is to make adjustments to the imaging system 100 to "optimize" its overall performance, subject to certain constraints. In many cases, the goal of optimization is to produce a digital image 180 which matches the application-specific idealized version 155 of the input source 150.

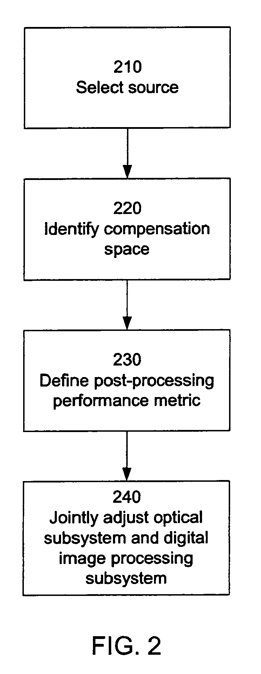

FIGS. 1 and 2 illustrate an example method for adjusting an electro-optic imaging system 100 according to the present invention. Referring to FIG. 2, the design method includes selecting 210 a source 150. The source 150 that is selected for adjustment of the system may or may not be the same as the sources that the system 100 is designed to image. For example, special test sources 150 may be used for the adjustment process. In target testing, a standard target object (e.g. Standard U.S. Air Force Target) may be used as the source for purposes of adjusting the system. Alternately, a series of sources that are representative of the actual sources to be imaged may be used. In some embodiments, the actual sources themselves may be used.

In addition, although the selected source 150 may be used in its physical form, in an alternate approach, a spatial model of the source is used instead. Models can be tailored for a specific situation, empirically measured, based on previously developed models and/or otherwise provided. Illumination, radiometry and geometry are factors that may be reflected in the source model. The spatial model of the source preferably includes a statistical model of the source. Further examples will be described below and are described in U.S. Patent Appl. Serial No. 11/155,870, "End to End Design of Electro-optic Imaging Systems," filed June 17, 2005 by M. Dirk Robinson and David G. Stork, which is incorporated herein by reference.

The compensation space for the electro-optic imaging system is also defined 220, either expressly or implicitly. In FIG. 1, the compensation space for each of the subsystems is defined by its compensation parameters $\theta_o$, $\theta_d$ and $\theta_i$, respectively.

For example, the compensation space for the optical subsystem 110, described by the vector $\theta_o$, may include different types of mechanical adjustments that may be made to the optical subsystem. A common compensation parameter is the back focus of a lens system. Many optical subsystems are designed to allow mechanical compensators to adjust the back focus of a lens system. Upon completion of the manufacturing process, the effective focal length of the lens may deviate significantly from that of the nominal design. Having the ability to adjust the back focus of a lens system enables the manufacturer to mate the optical lens system with the photodetector array while maintaining acceptable performance. Examples of other mechanical compensation parameters include the ability to shift or tilt various optical elements along any of the three principal coordinate axes.

Regarding the compensation space for the detector subsystem 120, described by the vector $\theta_d$, sensor manufacturers can use a variety of techniques to compensate for variations in the detector subsystem. These variations may be caused, for example, by variations in the semiconductor manufacturing process. Examples of compensation techniques include correlated double sampling, flat field correction, bias subtraction, and interpolation. These compensation techniques are often implemented within the detector subsystem itself. In the examples given below, the electrical compensation is modeled as a black-box process performed automatically by the detector subsystem. While the compensation performed by the detector subsystem may effectively minimize the deterministic artifacts associated with a particular sensor, the electrical compensation tends to generate spatially-varying noise properties for a given detector, which are then accounted for in the example adjustment processes described below.

The compensation space for the digital image processing subsystem 130, described by the vector $\theta_i$, may identify the type(s) of digital image processing which are available to be applied and parameters for that type of processing (e.g., linear or nonlinear filters, number of taps, tap weights, etc). Various non-imaging constraints or costs 170 on the adjustment may also be defined. For example, the compensation parameters typically may be adjusted only over a predefined range. The size of the compensation space of each subsystem will vary depending on the application. In some cases, there may be much latitude in adjusting a subsystem. In other cases, there may be little or no adjustment possible for a subsystem.

A post-processing performance metric 190 is also defined 230. The performance metric is post-processing in the sense that it is based on performance after image processing rather than before image processing. For examples, measures of the wavefront error or spot size of the intermediate optical image produced by the optical subsystem alone may be conventional error metrics for the optical subsystem but they are not post-processing performance metrics. In FIG. 1, the post-processing performance metric 190 is based on a comparison of the digital image 180 produced by the imaging system 100 compared to the ideal digital image 155.

In many situations, the image 180 is determined based on propagation of the selected source through the subsystems 110, 120 and 130. The propagation may be actual, simulated or modeled. For example, actual propagation through an optical subsystem can be determined by constructing a test optical bench and using an actual source to illuminate the actual physical optical subsystem. As an example of simulation, measurements of the actual optical subsystem may be made and then a corresponding "virtual" optical subsystem constructed on a computer. Propagation through the optical subsystem is then determined by simulating the propagation of a source through the virtual system. In the modeling approach, the optical subsystem may be modeled, for example, by its measured modulation transfer function (MTF). Propagation through the subsystem is then determined based on the MTF model of the subsystem.

The adjustment step 240 can be described as selecting an adjustment(s) within the adjustment space that optimizes the post-processing performance metric 190, possibly subject to certain constraints (e.g., limits on certain costs 170). The optical subsystem 110 and the digital image processing subsystem 130 preferably are adjusted together, rather than independently as is the case in conventional adjustment approaches. Mathematically, using the notation of FIG. 1, the adjustment step can be described as selecting the compensation parameters $\theta_o$, $\theta_d$ and $\theta_i$ to directly optimize the performance metric, possibly subject to certain constraints on the costs 170.

A number of optimization algorithms can be used. For some linear cases, parameters may be solved for analytically or using known and well-behaved numerical methods. For more complicated cases, including certain nonlinear cases, techniques such as expectation maximization, gradient descent and Linear programming can be used to search the design space.

Optimization may also include human participation. For example, a person may manually adjust compensators based on making a displayed digital image 180 look "best" in his estimation. Alternately, the performance metric 190 may be displayed and the person adjusts the compensators with the goal of optimizing the performance metric 190.

Note that in both FIGS. 1 and 2, there is no requirement for the optical subsystem 110, the detector subsystem 120 or the digital image processing subsystem 130, taken alone, to be optimal. It is quite possible for these subsystems to exhibit less than optimal performance when considered alone, while the overall electro-optic imaging system 100 still exhibits good or even optimal performance. This is in direct contrast to conventional adjustment methods where, for example, the optical subsystem 110 typically is adjusted by directly optimizing the image quality of the intermediate optical image formed by it. For example, the optical subsystem 110 may be adjusted based directly on minimizing the RMS wavefront error or the RMS spot size. In contrast, for the adjustment approach of FIG. 2, the intermediate optical image formed by the optical subsystem 110 may have worse image quality (e.g., as measured by wavefront error or spot size), which is then corrected by the digital image processing subsystem 130. The optical subsystem 110 is not adjusted based directly on improving the image quality of the intermediate optical image. Rather, it is adjusted jointly with the digital image processing subsystem 130, based directly on optimizing the post-processing performance metric 190.

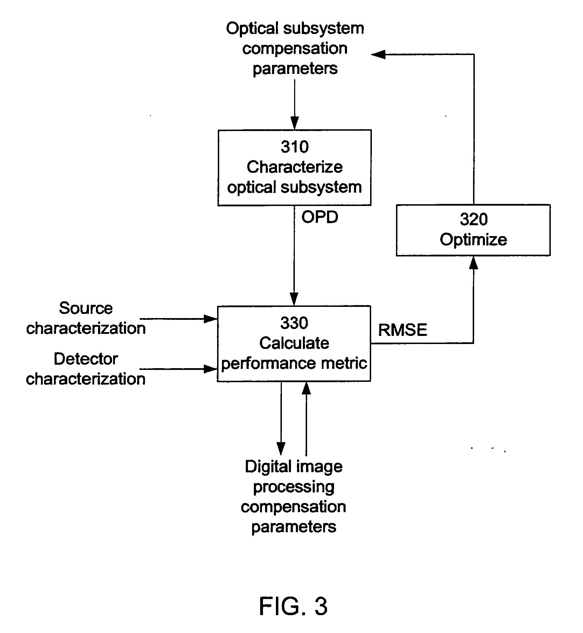

FIGS. 3-9 provide further descriptions of examples of the adjustment process of FIGS. 1-2. FIG. 3 is a diagram illustrating one example adjustment method. In step 310, the current values of the optical subsystem compensation parameters are used to characterize the optical subsystem. In this particular example, the optical subsystem is characterized by the wavefront error or optical path difference (OPD). The OPD can be measured interferometrically using conventional techniques.

More generally, other adjustment methods may be based on characterizations other than the OPD, and a range of conventional tools can be used to characterize 310 an optical subsystem. Such tools range from simple target image testing to extremely precise interferometric techniques. In one approach based on target testing, a standard target object (e.g. Standard U.S. Air Force Target) is imaged through the entire system (including optical subsystem, detector subsystem and digital image processing subsystem), and the post-processed image is then evaluated by a human observer. The overall performance is then judged to be acceptable or unacceptable. The human observer may have the ability to adjust the compensators to produce the "best" visual image of the test target. For example, as the human observer adjusts compensators in the optical subsystem, the digital image processing subsystem may automatically make corresponding adjustments (or not). A new post-processed image is displayed and the human observer can decide whether the post-processed image quality is better or worse, and then make further adjustments.

Another common characterization of an optical subsystem is the optical transfer function (OTF) or modulation transfer function (MTF). The MTF can be determined in a number of different ways. For example, the MTF can be physically measured using the actual optical subsystem. Measuring the OTF typically involves either measuring the point spread function (PSF) of the given optical subsystem using a tightly controlled point or line source, or directly measuring the MTF using a sinusoidal grating pattern. Alternately, physical measurements of the optical subsystem can be taken, and then the MTF calculated based on these measurements. Additional lens characterization methods are described, for example, in Robert E. Fischer and Biljana Tadic-Galeb, Optical System Design, McGraw-Hill, New York, 2000, which is incorporated herein by reference.

In step 330, the post-processing performance metric is determined based on characterizations of the source, the detector subsystem and the optical subsystem. In this particular example, the performance metric is the root mean square error between a simulated image and an ideal image, as will be described in greater detail below. The simulated image is determined by simulating the propagation of a source through the optical subsystem (based on the OPD characterization), the detector subsystem and the digital image processing subsystem.

Step 330 may have self-contained loops or optimizations. In this example, the digital image processing subsystem is adjusted for each new OPD and this process may or may not be iterative. Step 330 outputs the post-processing performance metric, which is used in step 320 to iterate the adjustment of the optical subsystem. Note that the adjustment of the digital image processing subsystem changes as the adjustment of the optical subsystem changes. Different adjustments to the image processing are used to compensate for different errors introduced by different adjustments of the optical subsystem. Thus, the optical subsystem and the digital image processing subsystem are jointly adjusted based on the post-processing performance metric. For example, this process may generate adjusted linear filter coefficients, as well as mechanical adjustments to the optical subsystem.

In one specific implementation of FIG. 3, propagation through the electro-optic imaging system is modeled in a fashion similar to that described in U.S. Patent Appl. Serial No. 11/155,870, "End to End Design of Electro-optic Imaging Systems," filed June 17, 2005 by M. Dirk Robinson and David G. Stork, which is incorporated herein by reference. The observed image y after propagation through the optical subsystem and the detector subsystem is given by:

$$\mathbf{y} = \mathbf{H}(\Theta)\mathbf{s} + \mathbf{n}, \qquad (1)$$

where the operator **H** is a linear characterization of the optical subsystem and the detector subsystem, **s** is the image captured under ideal conditions (e.g., an ideal geometric projection of the original source) and **n** is the random noise associated with the two subsystems. Note that **H** is a function of $\Theta$, which is the vector of adjustable compensation parameters. Eqn. 1 above is entirely analogous to Eqn. 10 in U.S. Patent Appl. Serial No. 11/155,870, which contains a further description of the various quantities in the equation and their derivation and is incorporated herein by reference.

The goal of the digital image processing subsystem is to provide an estimate $\hat{\mathbf{s}}$ of the ideal image that is as "close" as possible to the ideal image **s**. One form of image processing is linear image processing. These are generally simple to analyze formally and easy to implement in an actual system. In the linear framework, the original signal is estimated using a linear operator of the form:

$$\hat{\mathbf{s}} = \mathbf{R}\mathbf{y} \qquad (2)$$

where **R** is a linear filter.

In this example, the minimum mean square error (MMSE) is used as the Lyapunov or target function. Referring to FIG. 1, the electro-optic imaging system 100 is optimized such that the sum of the squared deviations between an ideal image 155 and the actual digital image 180 is minimized. Here, the ideal image is the bandlimited, noise-free digital image that would arise from a theoretical pinhole imaging system with sufficient illumination and in the absence of diffraction. Thus, for a fixed set of compensation parameters $\Theta$, the image processing filter is chosen to satisfy

$$\min_{\mathbf{R}} \mathbf{\mathcal{E}}_{n,s} [||\mathbf{R}\mathbf{y} - \mathbf{s}||^2], \qquad (3)$$

where the subscript of the expectation operator $\varepsilon$ represents an expectation taken over the random noise **n** and the (assumed) stationary random signal **s**. The MMSE filtering approach requires no assumptions about the statistical properties of the underlying signal or noise models other than their respective means and covariance structures. Under the assumption that the noise and the signal are uncorrelated, the ideal linear restoration matrix is given by

$$\mathbf{R} = \mathbf{C}_s \mathbf{H}^T [\mathbf{H}\mathbf{C}_s\mathbf{H}^T + \mathbf{C}_n]^{-1} \qquad (4)$$

where $\mathbf{C}_s$ and $\mathbf{C}_n$ represent the covariance matrices of the signal and the noise respectively. The per-pixel MSE performance is predicted by such a system using

$$\mathrm{MSE}(\Theta, \mathbf{R}) = (1/N)\,\mathrm{Tr}[(\mathbf{R}\mathbf{H} - \mathbf{I})\mathbf{C}_s(\mathbf{R}\mathbf{H} - \mathbf{I})^T + \mathbf{R}\mathbf{C}_n\mathbf{R}]. \qquad (5)$$

where N is the number of pixels and Tr[ ] is the trace operator.

However, unlike the design problem described in U.S. Patent Appl. Serial No. 11/155,870, when dealing with adjustment of an already fabricated optical subsystem and detector subsystem, the noise covariance for the sensor $\mathbf{C}_n$ and the optical point spread function (PSF), and hence the operator **H**, may be initially unknown since they preferably would account for manufacturing variations. Characterization of these terms may be achieved by measuring them, rather than by predicting them based on the nominal design.

As described previously, a variety of techniques exist for measuring the optical characteristics of a given optical subsystem. One simple approach to estimating both the PSF and the noise characteristics involves repeated measurements of an ideal point source (also known as the star test) at several points across the image field. Averaging the Fourier transforms of these point sources offers an estimate of the PSF and hence the optical transfer function (OTF). Furthermore, the noise covariance matrices may be also be estimated in flat or dark test regions, or by using other more sophisticated conventional approaches such as those described in Glenn Healey and Raghava Kondepudy, "Radiometric CCD camera calibration and noise estimation," IEEE Transactions on Pattern Analysis and Machine Intelligence, 16(3): 267-276, 1994, which is incorporated herein by reference.

Regardless of the approach for characterizing **H** and $\mathbf{C}_n$, once these terms are characterized, the ideal set of optical compensators $\Theta$ and image processing filter **R** can be chosen to minimize the predicted RMSE of Eqn. 5.

Utilizing nonlinear restoration techniques widens the space of possible post-processing performance metrics.

For instance, the class of nonlinear iterative restoration techniques is often statistically motivated, such as Maximum Likelihood (ML) or Maximum A-Posteriori (MAP). Such approaches have the benefit of being asymptotically unbiased with minimum error variance, which are stronger properties than MMSE.

For instance, assuming that the signal **s** is a deterministic, yet unknown signal, the ML estimate of the signal satisfies

$$\hat{\mathbf{s}} = \max_{\mathbf{s}} L(\mathbf{y}|\mathbf{s}), \qquad (6)$$

where $L(\mathbf{y}|\mathbf{s})$ is the statistical likelihood function for the observed data. Since it is assumed in this particular example that the additive noise in the signal model is Gaussian, the ML cost function reduces to a least squares (LS) objective function

$$\hat{\mathbf{s}} = \min_{\mathbf{s}} ||\mathbf{y} - \mathbf{H}\mathbf{s}||^2$$
$$= [\mathbf{H}^T\mathbf{H}]^{-1}\mathbf{H}^T\mathbf{y}. \qquad (7)$$

For signals of large dimension (i.e. large numbers of pixels), it may become prohibitive to explicitly construct these matrices. Often, iterative methods are utilized to minimize Eqn. 7 eliminating the need to explicitly construct the matrices. In many situations, the operator **H** is rank-deficient leading to unstable solutions. In such cases, additional information, such as source power spectral density information or source functional smoothness, can be used to constrain the space of solutions.

When statistical prior information exists about the unknown signal, the MAP cost function becomes

$$\hat{\mathbf{s}} = \min_{\mathbf{s}} ||\mathbf{y} - \mathbf{H}\mathbf{s}||^2 + \psi C(\mathbf{s}) \qquad (8)$$

where C(**s**) represents the prior information about the unknown signal and ☐.represents a Lagrangian-type relative weighting between the data objective function and prior information. Cost functions of this form may not permit analytic solutions. The Cramer-Rao inequality could be used to bound as well as predict asymptotically the nonlinear estimator performance.

The adjustment approach described above is now applied to specific examples using a simulated document scanner system. In this system, a planar text document is imaged onto a linear array detector. The model approximates a 300 dpi scanner system with reasonably high SNR. In the following simulations, the noise associated with the linear array is modeled as being uncorrelated additive Gaussian noise with variance equal to 1 gray level (out of 256).

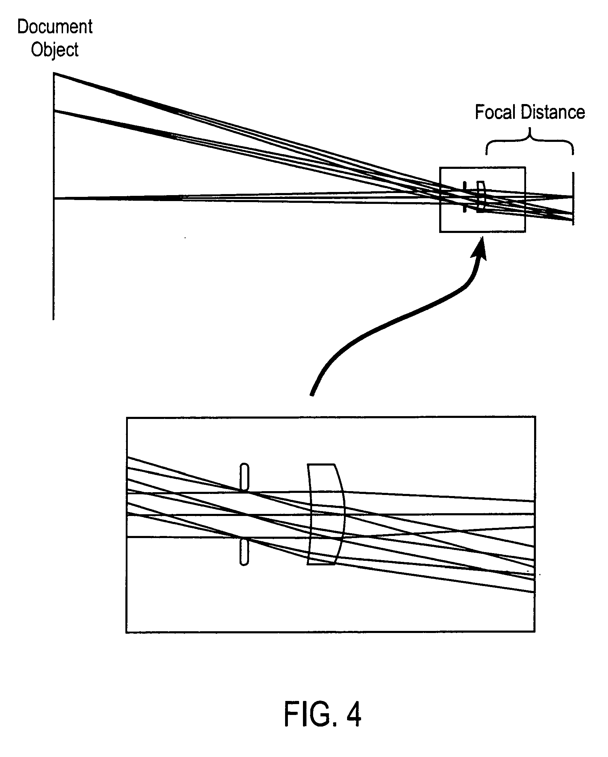

FIGS. 4-5 are an example concerning the adjustment of the "focal distance" (see FIG. 4) for a singlet lens. The general specifications for the singlet lens imaging system are given below:

Pupil Diameter = 9.8 mm
Pixel Spacing = 15 $\mu$m
Fill Factor = 75 percent
Detector Depth = 8 bits
Focal Length = 72.5 mm
Object Distance = 500 mm
Field Height = +/- 150 mm
Lens thickness = 8 mm
Glass is BK7
Wavelength = 500 nm

The singlet lens is assumed to be fabricated and assembled perfectly, leaving only the back focus as the unknown optical adjustment. Even in this idealized scenario, the traditional approach of finding the OPD-minimizing focal point without considering subsequent image processing, produces inferior results.

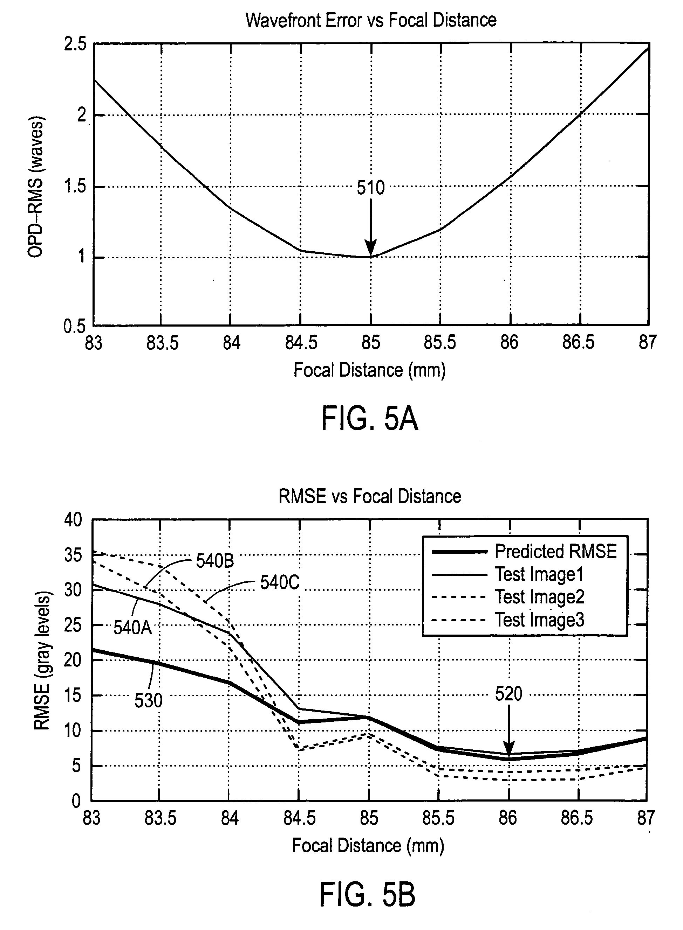

To simulate the traditional approach to adjusting the back focal length, the optical lens setup is assumed to be characterized by a wavefront error measuring device. The OPD-RMS wavefront error is averaged over the field angles representing 0, 70, and 100 percent of the full field image, as shown by the ray bundles in FIG. 4. FIG. 5A shows the wavefront error as a function of back focal distance. To minimize the wavefront error, the back focal length should be adjusted to achieve a spacing of 85 mm (point 510) from the back surface of the lens to the detector. This value agrees with the lens maker's equation predicting the paraxial focus to be 84.8 mm.

Turning now to the end-to-end adjustment approach, optical subsystem is characterized by its OTF. In this example, the OTF was estimated at 26 equally-spaced field locations at the sensor plane using a star pattern training image to estimate the PSF. Using the estimates of the OTF and the noise power covariance $C_n$ (in this case uncorrelated noise), the root mean square error (RMSE) performance is predicted using the square root of the MSE given by Eqn. 5. The signal covariance matrix $\mathbf{C}_s$ was estimated by randomly selecting 100 tiles from a text document training images and estimating the covariance matrix assuming the signal to be stationary (i.e., $\mathbf{C}_s$ is Toeplitz). Line 530 in FIG. 5B shows the predicted RMSE as a function of the back focal distance. The predicted RMSE curve indicates that the ideal focal distance is around 86 mm (point 520), versus the 85 mm predicted by the traditional adjustment approach.

To compare the predicted performance to the actual performance, the optical images were rendered using the actual OTF's computed using the lens adjustment software ZEMAX. Then, the reconstruction filters used to predict RMSE performance at each focal distance were applied to document test images. Curves 540A-C in FIG. 5B shows the actual RMSE performance on the test images. The solid line 540A represents the actual RMSE performance for the sample image (Test Image 1) used to estimate the signal covariance matrix $C_s$. The actual RMSE follows closely the performance predicted by Eqn. 5. Dashed lines 540B and 540C, represent the actual RMSE using test images with very different statistics (different font size, line spacing, graphics, images). Again, the ideal focal distance is around 86 mm. In fact, the RMSE performance at this focus is nearly two times better than the performance at the focal distance of 85 mm resulting from traditional adjustment.

This example illustrates that the adjustment method can produce improvement even in optical subsystems that are perfectly manufactured but which were adjusted according to traditional approaches. In other words, the end-to-end adjustment strategy can be used to improve the adjustment of current lens adjustments and manufacturing processes.

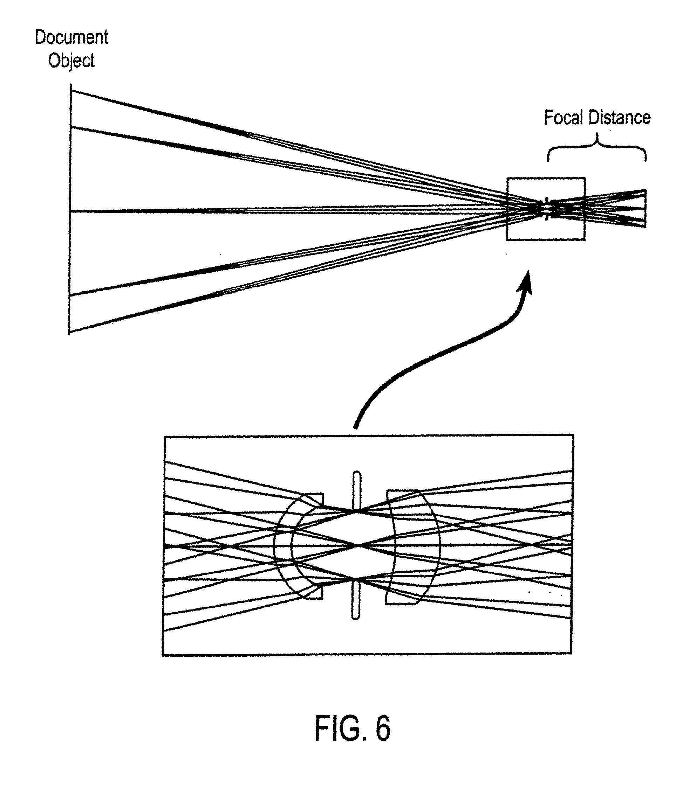

FIGS. 6-8 are an example concerning the adjustment of a more complicated doublet lens system. The general specifications for the doublet lens imaging system are given below:

        Pupil Diamater = 12 mm
        Pixel Spacing = 15 $\mu$m
        Fill Factor = 75 percent
        Detector Depth = 8 bits
        Focal Length = 72.5 mm
        Object Distance = 500 mm
        Field Height = +/- 150 mm
        Lens thickness = 8 mm
        Glass is BK7
        Wavelength = 500 nm

As with the singlet example, for comparison purposes, the back focal length of the doublet is adjusted in a traditional fashion to minimize the wavefront error. This set of simulations introduces lens tilt and decentration to simulate assembly errors. With the introduction of such manufacturing defects, the lens system is no longer rotationally symmetric. As such, when evaluating the wavefront error, the OPD-RMS is measured at five field locations at -100, -70, 0, +70, +100 percent of the full field, as shown by the ray bundles in FIG. 6.

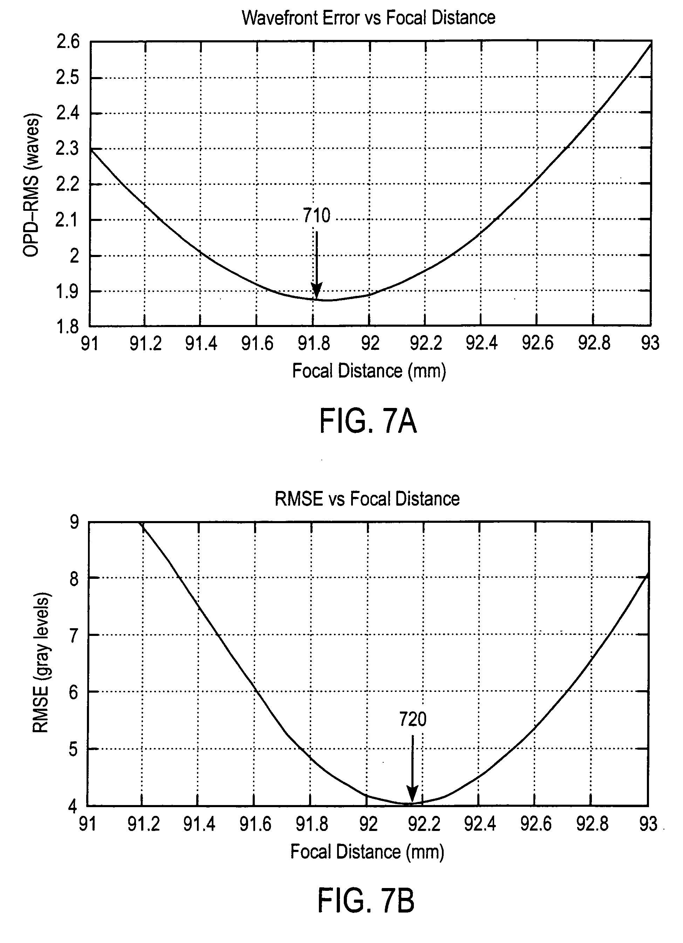

FIGS. 7A-7B examine a situation where the first lens is titled by 5 degrees in both the X and Y directions. FIG. 7A graphs the wavefront error merit function as a function of back focal length. The traditional adjustment approach sets the back focal length at approximately 91.8 mm (point 710) in order to minimize the OPD-RMS. This would result in an RMSE of approximately 5 gray levels. In contrast, adjustment based on end-to-end performance sets the back focal length at approximately 92.2 mm (point 720), which minimizes the RMSE as shown in FIG. 7B. The resulting RMSE of approximately 4 gray levels is almost a 20 percent performance improvement over the traditional adjustment approach. When testing the actual RMSE performance on Test Image 1, the traditional adjustment approach produced an RMSE of 4.3 gray levels whereas the end-to-end adjustment approach resulted in only 3.6 gray levels of error.

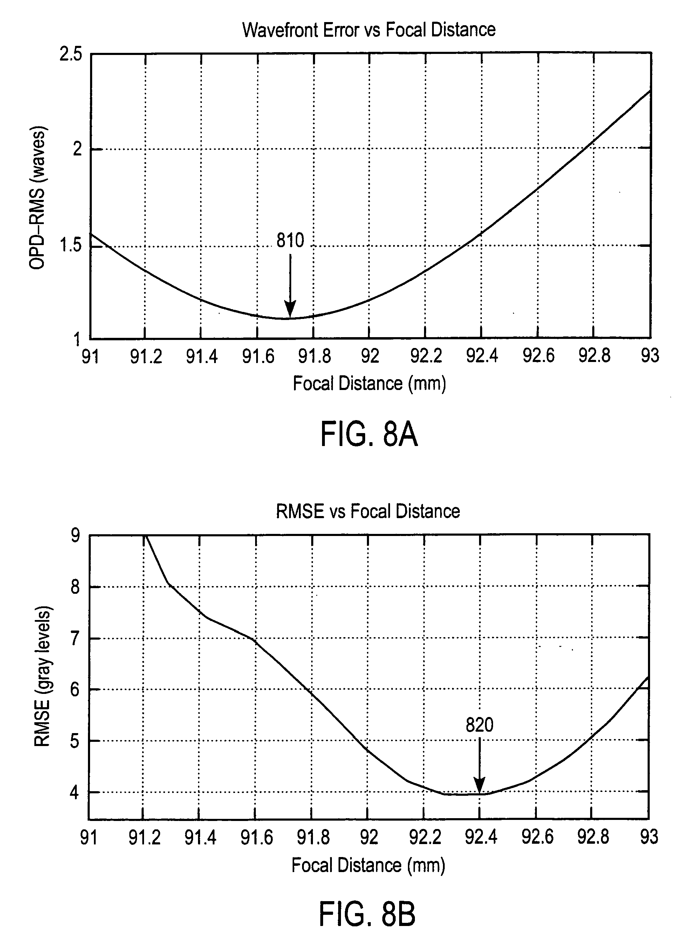

FIGS. 8A-8B illustrate an example where the first lens is decentered by 0.1 mm from the optical axis in both the X and Y axes. FIG. 8A graphs the wavefront error as a function of back focal length. In this example, the traditional adjustment approach sets the back focal length at approximately 91.7 mm (point 810), resulting in an RMSE of approximately 6.5 gray levels. In contrast, adjustment based on end-to-end performance sets the back focal length at approximately 92.4 (point 820), with a resulting RMSE of approximately 4 gray levels. The difference in adjustment of the back focal length is nearly 700 microns. More importantly, the predicted improvement in RMSE is more than 30 percent. For Test Image 1, the actual RMSEs were 5.4 gray levels for the traditional approach versus 3.3 gray levels for the end-to-end approach.

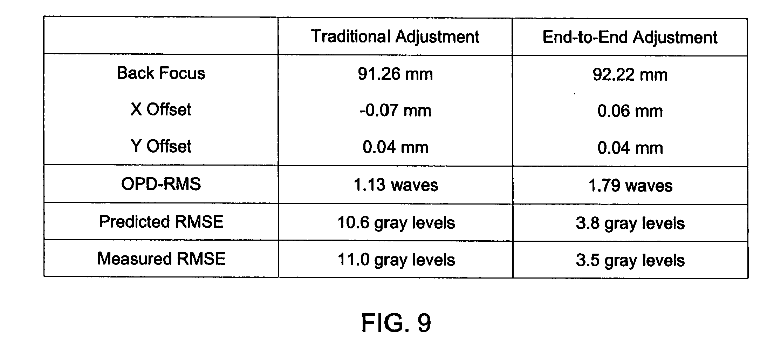

In FIG. 9, the first lens is tilted by 5 degrees in both the X and Y directions, as in the example of FIG. 7. In this scenario, however, there are multiple optical compensators. The first lens can be intentionally decentered both in X and Y, in addition to adjusting the back focal length. While lateral shifting of the first lens will not directly correct the errors introduced by the lens tilt, it is possible to use these additional degrees of freedom to improve the merit function (either OPD-RMS or predicted RMSE). There are now three optical compensation parameters: the two decenters in X and Y, and the back focal length. FIG. 9 compares the results of the traditional versus the end-to-end adjustments. The row "OPD-RMS" is the wavefront error; "Predicted RMSE" is the predicted RMSE; and "Measured RMSE" is the RMSE measured for Test Image 1.

Interestingly, the table shows that even though the wavefront error is reduced significantly by adding two additional compensators, going from about 1.9 waves in FIG. 7A to 1.13 waves of error in FIG. 9, the RMSE performance degrades substantially. This further corroborates the notion that the wavefront error or OPD-RMS is not necessarily the best predictor of overall image system performance. The end-to-end adjustment strategy, however, leverages the additional degrees of freedom for a slight improvement in the RMSE performance.

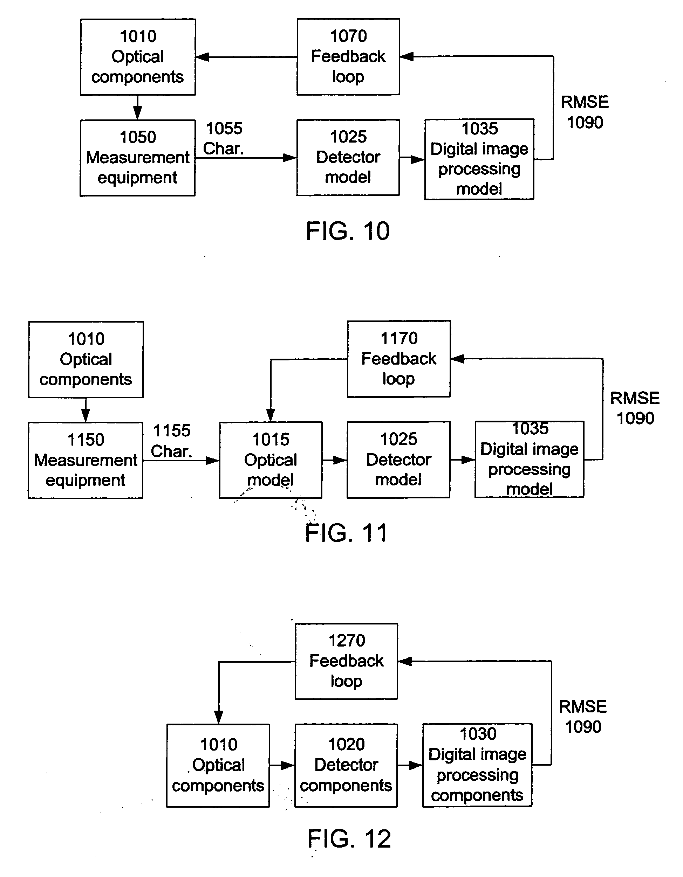

The end-to-end adjustment approach described above can be implemented in many different ways. FIGS. 10-12 illustrate some examples. In these figures, the term "components" will be used to refer to the actual physical subsystem whereas "model" will be used to refer to a model or simulation of the subsystem. Thus, the term "optical components" means the actual optical subsystem as physically built in hardware and the term "optical model" means a model or simulation of the optical subsystem, for example as implemented in software.

FIG. 10 is an implementation based on optical measurement equipment 1050. Examples of equipment 1050 include test benches that measure OTF using sinusoidal gratings, star test devices for measuring the point spread function, and interferometric testers to measure wavefront error. This equipment is conventionally used to characterize optical components. For example, the optical components 1010 may be placed into an interferometric device 1050. The device 1050 propagates light through the optical components and interferometrically compares the resulting wavefront against some reference wavefront to determine the OPD of the optical components 1010. In a traditional adjustment approach, the optical components 1010 may be adjusted to directly minimize the OPD.

In FIG. 10, however, the characterization 1055 produced by the measurement equipment 1050 is used to determine propagation through the optical components 1010. Propagation through the detector subsystem and the digital image processing subsystem are then determined via the use of models 1025, 1035. The models 1025, 1035 preferably include any relevant process variations present in the actual physical detector components and digital image processing components and may be based on measurements of these components. Thus, propagation through the entire electro-optic imaging system is determined and a post-processing performance metric 1090 can be calculated. A feedback loop 1070 physically adjusts the compensators in the optical components 1010 in an attempt to optimize the performance metric 1090. The compensators may be adjusted either manually (e.g., by a technician based on display of the performance metric 1090) or automatically (e.g., by an automated system).

In one implementation, conventional measurement equipment 1050 is modified to incorporate the models 1025 and 1035 in software. For example, a conventional interferometric tester may display an OPD map of the optical subsystem. In this implementation, the tester is modified to include the detector model and digital image processing model. Test images may also be loaded to the modified tester. After obtaining the OPD map, the tester simulates propagation through detector and digital image processing subsystems and displays a simulated image, rather than the OPD map.

In FIG. 11, the entire optimization loop is based on models. The actual optical components 1010 are characterized by equipment 1150 to produce a model 1015 of the optical components. The model 1015 preferably is detailed enough to accurately predict the effect produced by adjustment of compensators. Propagation through the electro-optic imaging system is determined based on the optical model 1015 in combination with models 1025, 1035 of the other two subsystems. The feedback loop 1170 adjusts "virtual compensators" in the optical model 1015 based on the performance metric 1090. Once the various models have been optimized, the settings for the compensators are transferred to the corresponding physical components. For example, if optimization using the optical model results in a final back focal length of 82.3 mm, the actual physical system would then be adjusted to achieve this back focal length.

In FIG. 12, the opposite approach is taken. The entire optimization loop is based on the physical components. Propagation through the electro-optic imaging system is determined by using a physical source to illuminate the optical components 1010, the detector components 1020 and the digital image processing components 1030. The output of the digital image processing components is used to calculate the performance metric 1090, which is then used by the feedback loop 1270 to adjust the physical compensators. FIGS. 10-12 are just some examples; other implementations will be apparent.

Although the detailed description contains many specifics, these should not be construed as limiting the scope of the invention but merely as illustrating different examples and aspects of the invention. Various other modifications, changes and variations which will be apparent to those skilled in the art may be made in the arrangement, operation and details of the method and apparatus of the present invention disclosed herein without departing from the spirit and scope of the invention as defined in the appended claims.

**Claims**

1. A method for adjusting an electro-optic imaging system, the electro-optic imaging system including an optical subsystem, a detector subsystem and a digital image processing subsystem,
**characterized in that**:

    the method comprising:

    determining propagation of a source through the optical subsystem, the detector subsystem and the digital image processing subsystem; and
    adjusting the optical subsystem based directly on a post-processing performance metric that is a function of the determined propagation.

2. The method of claim 1 wherein the step of adjusting the optical subsystem is performed without requiring a direct optimization of an image quality of an intermediate optical image of the source formed by the optical subsystem.

3. The method of claim 2 wherein the step of adjusting the optical subsystem is performed without requiring a direct minimization of a wavefront error of the intermediate optical image or a direct minimization of a spot size of the intermediate optical image.

4. The method of claim 2 or 3 wherein the adjusted optical subsystem forms an intermediate optical image that is significantly worse in image quality than that formed by an optical subsystem adjusted to optimize the image quality of the intermediate optical image.

5. The method of any one of claims 1 to 4 wherein the step of adjusting the optical subsystem comprises jointly adjusting the optical subsystem and the digital image processing subsystem based directly on the post-processing performance metric.

6. The method of any one of claims 1 to 5 wherein the step of jointly adjusting the optical subsystem and the digital image processing subsystem occurs as part of a manufacture of the electro-optic imaging system.

7. The method of any one of claims 1 to 6 wherein the step of adjusting the optical subsystem occurs as part of an assembly of the electro-optic imaging system.

8. The method of any one of claims 1 to 7 wherein the step of adjusting the optical subsystem occurs as part of a field adjustment of the electro-optic imaging system.

9. The method of any one of claims 1 to 8 wherein the step of determining propagation of a source through the optical subsystem comprises an actual source illuminating an actual optical subsystem.

10. The method of any one of claims 1 to 9 wherein the step of determining propagation of a source through the optical subsystem comprises:

    determining a model of an actual optical subsystem; and
    determining propagation through the actual optical subsystem based on the model.

11. The method of claim 10 wherein the model of the actual optical subsystem is based on a measured point spread function, modulation transfer function or optical transfer function of the actual optical subsystem.

12. The method of claim 11 wherein the point spread function, modulation transfer function or optical transfer function is spatially-varying.

13. The method of claim 11 wherein the point spread function, modulation transfer function or optical transfer function is spatially-varying and approximated by interpolation.

**14.** The method of any one of claims 1 to 13 wherein the step of determining propagation of a source through the optical subsystem, the detector subsystem and the digital image processing subsystem is based on a spatial model of the source.

**15.** The method of claim 14 wherein the spatial model of the source includes a two-dimensional power spectral density function.

**16.** The method of claim 14 or 15 wherein the spatial model of the source includes a statistical model of the source.

**17.** The method of any one of claims 1 to 16 wherein propagation through the optical subsystem and detector subsystem is determined based on a model $\mathbf{y}=\mathbf{Hs}+\mathbf{n}$, where $\mathbf{y}$ is an image of the source after propagation through the optical subsystem and the detector subsystem, $\mathbf{s}$ is an ideal sampled image of the source, $\mathbf{H}$ is a sampled point spread function accounting for both the optical subsystem and the detector subsystem, and $\mathbf{n}$ is noise.

**18.** The method of claim 17 wherein the step of adjusting the optical subsystem comprises jointly adjusting the optical subsystem and the digital image processing subsystem based directly on the post-processing performance metric, and the step of jointly adjusting the optical subsystem and the digital image processing subsystem is limited to linear digital image processing subsystems that restore degradation caused by a point spread function of the optical subsystem and/or the detector subsystem.

**19.** The method of any one of claims 1 to 18 wherein the step of adjusting the optical subsystem comprises jointly adjusting the optical subsystem and the digital image processing subsystem based directly on the post-processing performance metric, and the step of jointly adjusting the optical subsystem and the digital image processing subsystem includes non-linear digital image processing subsystems that restore degradation caused by a point spread function of the optical subsystem and/or the detector subsystem.

**20.** The method of any one of claims 1 to 19 wherein the post-processing performance metric is a mean square error between an ideal image of the source and an image predicted by the determined propagation of the source through the optical subsystem, the detector subsystem and the digital image processing subsystem.

**21.** The method of any one of claims 1 to 20 further comprising:

generating a description of the adjustment to the optical subsystem.

**22.** A system for adjusting an electro-optic imaging system, the electro-optic imaging system including an optical subsystem, a detector subsystem and a digital image processing subsystem,
**characterized in that**:

the system comprising:

means for determining propagation of a source through the optical subsystem, the detector subsystem and the digital image processing subsystem; and
means for adjusting the optical subsystem based directly on a post-processing performance metric that is a function of the determined propagation.

**23.** An apparatus for adjusting an optical subsystem that is part of an electro-optic imaging system, **characterized in that**:

the electro-optic imaging system further comprising a detector subsystem and a digital image processing subsystem, and the apparatus comprising:

optical measurement equipment for characterizing the optical subsystem;
software coupled to access the characterization of the optical subsystem, for determining a post-processing performance metric based on propagation of a source through the optical subsystem, the detector subsystem and the digital image processing subsystem, wherein propagation through the optical subsystem is based on the characterization of the optical subsystem; and
a feedback loop for adjusting the optical subsystem based directly on the post-processing performance metric.

**24.** The apparatus of claim 23 wherein the optical measurement equipment measures an OTF of the optical subsystem using sinusoidal gratings.

**25.** The apparatus of claims 23 or 24 wherein the optical measurement equipment comprises a star test device for measuring a PSF of the optical subsystem.

**26.** The apparatus of claim 23, 24 or 25 wherein the optical measurement equipment comprises an interferometric device for measuring a wavefront of the optical subsystem.

**27.** The apparatus of any one of claims 23 to 26 wherein the feedback loop adjusts physical compensators in the actual optical subsystem in response to the post-processing performance metric.

**28.** The apparatus of any one of claims 23 to 27 wherein:

the software produces a model of the optical subsystem based on the characterization of the optical subsystem; propagation through the optical subsystem is determined based on the model; and the feedback loop adjusts virtual compensators in the model of the optical subsystem in response to the post-processing performance metric.

**29.** An apparatus for adjusting an electro-optic imaging system,
**characterized in that**:

the apparatus comprising:

a source;
an electro-optic imaging system comprising an optical subsystem, a detector subsystem and a digital image processing subsystem; and
a feedback loop coupled between the digital image processing subsystem and the optical subsystem for adjusting the optical subsystem based directly on a post-processing performance metric that is based on propagation of the source through the optical subsystem, the detector subsystem and the digital image processing subsystem.

Costs

$K_o(\theta_o)$    $K_d(\theta_d)$    $K_i(\theta_i)$

100

Source 150

| Optics 110 | Detector 120 | Digital Image Processing 130 |

Digital Image 180

$\theta_o$    $\theta_d$    $\theta_i$

Compensation Parameters

Application-dependent Ideal Representation 155

Performance Metric 190

FIG. 1

FIG. 2

Optical subsystem
compensation
parameters

310
Characterize
optical subsystem

OPD

320
Optimize

Source
characterization

Detector
characterization

330
Calculate
performance metric

RMSE

Digital image
processing
compensation
parameters

FIG. 3

Document
Object

Focal Distance

FIG. 4

**Wavefront Error vs Focal Distance**

FIG. 5A

**RMSE vs Focal Distance**

FIG. 5B

Document
Object

Focal Distance

FIG. 6

Wavefront Error vs Focal Distance

FIG. 7A

RMSE vs Focal Distance

FIG. 7B

FIG. 8A

FIG. 8B

|  | Traditional Adjustment | End-to-End Adjustment |
|---|---|---|
| Back Focus | 91.26 mm | 92.22 mm |
| X Offset | -0.07 mm | 0.06 mm |
| Y Offset | 0.04 mm | 0.04 mm |
| OPD-RMS | 1.13 waves | 1.79 waves |
| Predicted RMSE | 10.6 gray levels | 3.8 gray levels |
| Measured RMSE | 11.0 gray levels | 3.5 gray levels |

FIG. 9

EP 1 775 967 A2

| | | |
|---|---|---|
| 1010 Optical components | 1070 Feedback loop | |
| 1050 Measurement equipment | 1025 Detector model | 1035 Digital image processing model |

1055 Char.

RMSE 1090

## FIG. 10

| | | |
|---|---|---|
| 1010 Optical components | 1170 Feedback loop | |
| 1150 Measurement equipment | 1015 Optical model | 1025 Detector model |

1155 Char.

1035 Digital image processing model

RMSE 1090

## FIG. 11

1270 Feedback loop

| 1010 Optical components | 1020 Detector components | 1030 Digital image processing components |
|---|---|---|

RMSE 1090

## FIG. 12

## REFERENCES CITED IN THE DESCRIPTION

**Patent documents cited in the description**

- US 155870 A

**Non-patent literature cited in the description**

- **ROBERT E. FISCHER ; BILJANA TADIC-GALEB.** Optical System Design. McGraw-Hill, 2000

- **GLENN HEALEY ; RAGHAVA KONDEPUDY.** Radiometric CCD camera calibration and noise estimation. *IEEE Transactions on Pattern Analysis and Machine Intelligence,* 1994, vol. 16 (3), 267-276